# EUROPEAN PATENT APPLICATION

(11) **EP 4 755 946 A1**
(43) Date of publication of application: **10.06.2026**
(21) Application number: 24866807.1
(22) Date of filing: 28.03.2024
(51) Int. Cl.: C08G 69/42, C08G 69/26, C08L 77/06

(54) **NANOSCALE POLYAMIDE PARTICLE AND PREPARATION METHOD THEREFOR**

(30) Priority: 19.09.2023 CN 202311212598
(71) Applicant: Anhui Like New Material Technology Co., Ltd., Hefei, Anhui 230031 (CN)
(72) Inventor: KE, Zhuo, Hefei, Anhui 230031 (CN); GAO, Ying, Hefei, Anhui 230031 (CN); ZHAO, Jia, Hefei, Anhui 230031 (CN)
(74) Representative: Dehns Germany Partnerschaft mbB
(86) International application number: PCT/CN2024/084567
(87) International publication number: WO 2025/060381

(57) **Abstract**

Provided is a nanoscale polyamide particle and a preparation method therefor, belonging to the technical field of preparation of polyamide particles. The method includes: (1) mixing a diacyl chloride monomer substituted from furandicarboxylic acid or a derivative thereof, an aromatic diamine monomer, and a diamine monomer having a sulfonic acid group in a first polymerization solvent for a polymerization reaction; (2) adding an alkali into semi-aromatic polyamide; (3) subjecting the polyamide to spray drying, then adding water for soaking, and then filtering, cleaning, and oven-drying the soaked polyamide; (4) mixing a polyamide particle with a second polymerization solvent, and then adding an unstable solvent; and (5) mixing a mixed solution with a salt solution, then emulsifying the same, and then removing the second polymerization solvent to obtain the nanoscale polyamide particle. The nanoscale polyamide particle prepared by the present invention can reach a particle size below 10 nm, and meanwhile, a preparation range of the particle size of the polyamide particle can be expanded, thereby expanding an application scenario.

## Description

The present application claims priority to Chinese patent application No. 202311212598.6, filed on September 19, 2023. The entire contents of the above Chinese patent application are incorporated into the present application by reference.

### Technical Field

The present invention belongs to the technical field of preparation of polyamide particles, and particularly relates to a nanoscale polyamide particle and a preparation method therefor.

### Background

Lithium batteries are mainly composed of cathodes, anodes, electrolytes, and separators between the cathodes and the anodes. Except for the electrolytes, the other components are usually coated on substrates and coated with special materials to enhance performance. Generally, the cathodes are coated with oil-based coatings, the anodes are coated with water-based coatings, and the separators can be coated with both the water-based coatings and the oil-based coatings. Coating layers coated with the oil-based coatings have better uniformity, while the water-based coatings are more environmentally friendly. The water-based coatings for the separators are mainly based on inorganic substances such as alumina, while the water-based coatings for the anodes are mainly based on hard carbon materials, and both use water-soluble polymer materials as additives to adhere the materials to the substrates.

Polyamide particles are commonly used in water-based coating materials. For example, according to a method for preparing a water-based coated separator with high electrolyte wettability disclosed in publication (announcement) No. CN116315425A, a modified bio-based polyamide particle is added to reduce a contact angle with an electrolyte, thereby greatly improving the wettability of the electrolyte. For another example, according to a method for preparing a nanoscale bio-based semi-aromatic polyamide particle disclosed in publication (announcement) No. CN116162266A, the method is used in any coating system with water as a solvent, which can effectively improve the heat resistance and membrane rupture temperature of a coated product.

However, the polyamide particles prepared by existing polyamide preparation methods cannot reach 10 nanometers or below, which still have certain limitations when applied to the water-based coatings. Moreover, existing polyamide preparation schemes generate a large amount of waste liquid and cannot effectively control the particle size of polyamide.

### Summary

The purpose of the present invention is to provide a nanoscale polyamide particle and a preparation method therefor to solve the above problems.

The above purpose is achieved through the following technical solutions in the present invention.

A method for preparing a nanoscale polyamide particle includes the following steps:
(1) mixing a diacyl chloride monomer substituted from furandicarboxylic acid or a derivative thereof, an aromatic diamine monomer, and a diamine monomer having a sulfonic acid group in a first polymerization solvent for a polymerization reaction to obtain semi-aromatic polyamide;
(2) adding an alkali into the semi-aromatic polyamide for neutralization to obtain polyamide;
(3) subjecting the polyamide to spray drying, then adding water for soaking, and then filtering, cleaning, and oven-drying the soaked polyamide to obtain a polyamide particle;
(4) mixing the polyamide particle with a second polymerization solvent to form a diluted solution with a solid content of 1 wt%-15 wt%, and then adding an unstable solvent to obtain a mixed solution; and
(5) mixing the mixed solution with a salt solution, then emulsifying the same to obtain a suspension containing a nanometer polyamide particle, and then removing the second polymerization solvent to obtain the nanoscale polyamide particle.

As a further optimized solution of the present invention, the first polymerization solvent and the second polymerization solvent respectively and independently include at least one of N-methylpyrrolidone, N,N-dimethylacetamide, and N,N-dimethylformamide.

As a further optimized solution of the present invention, in the step (1), by mass percentage, the diacyl chloride monomer substituted from furandicarboxylic acid or a derivative thereof accounts for 3%-10% in the first polymerization solvent, the diamine monomer having a sulfonic acid group accounts for 3%-10% in the first polymerization solvent, and the aromatic diamine monomer accounts for 3%-10% in the first polymerization solvent.

As a further optimized solution of the present invention, in the step (1), the diacyl chloride monomer substituted from furandicarboxylic acid is 2,5-furandicarbonyl chloride; and the diacyl chloride monomer substituted from a furandicarboxylic acid derivative includes one or more of terephthaloyl chloride, isophthaloyl chloride, o-phthaloyl chloride, 1,9-naphthalenedicarbonyl chloride, adipoyl chloride, azelaoyl chloride, and dodecanedioyl chloride.

As a further optimized solution of the present invention, in the step (1), the aromatic diamine monomer includes at least one of 4,4-oxydianiline, 4,4-methylenedianiline, 4,4-diaminobiphenyl, 2,5-furandimethylamine, p-phenylenediamine, and m-phenylenediamine.

As a further optimized solution of the present invention, in the step (1), the diamine monomer having a sulfonic acid group includes at least one of 2,5-diaminobenzenesulfonic acid, 2,5-diamino-1,4-benzenedisulfonic acid, and benzidinedisulfonic acid.

As a further optimized solution of the present invention, in the step (2), the alkali includes at least one of calcium hydroxide, sodium hydroxide, potassium hydroxide, lithium hydroxide, liquid ammonia, sodium carbonate, calcium carbonate, potassium carbonate, and lithium carbonate, and an addition amount of the alkali is 2 wt%-7 wt% of the semi-aromatic polyamide.

As a further optimized solution of the present invention, in the step (4), the unstable solvent includes at least one of water, ethanol, ethylene glycol, propanol, and isopropanol.

As a further optimized solution of the present invention, in the step (5), a salt in the salt solution includes at least one of calcium chloride, sodium chloride, potassium chloride, and lithium chloride, a solvent includes at least one of water, ethanol, ethylene glycol, propanol, and isopropanol, a mass concentration of the salt solution is 0%-2%, and a volume ratio of the salt solution to the mixed solution is not less than 1.

A nanoscale polyamide particle is prepared by the above preparation method, which can achieve a D90 particle size below 500 nm as detected by a laser particle size analyzer. It is found through scanning electron microscopy (SEM) that the particle size can be below 10 nm.

Beneficial effects of the present invention are as follows.
(1) The nanoscale polyamide particle prepared in the present invention has a small particle size, which can reach a D90 particle size below 500 nm as detected by a laser particle size analyzer. It is found through SEM that the particle size can be below 10 nm. The nanoscale polyamide particle is insoluble in water and can be used as a material for water-based coatings.
(2) The nanoscale polyamide particle prepared in the present invention is an agglomerated particle, has excellent dispersibility in water, can be dispersed in water for a long time, and has a low sedimentation speed.
(3) The present invention can reduce the amount of waste liquid after a reaction. Meanwhile, due to the introduction of the sulfonic acid group, the sulfonic acid group having good hydrophilicity can increase the solid content of polyamide, so that the large polyamide particle can be diluted into a solution with a solid content of 1 wt%-15 wt%. In the prior art, the solid content of polyamide in diluted solutions is generally about 1 wt%. Therefore, a particle size range of the prepared polyamide can be expanded, an application scope is wider, and marketization is more facilitated.

### Brief Description of the Drawings

FIG. 1 is a flow diagram of a method for preparing a nanoscale polyamide particle according to one example of the present invention;
FIG. 2 is an SEM image of a nanoscale polyamide particle prepared in Example 1;
FIG. 3 is an SEM image of a nanoscale polyamide particle prepared in Example 3;
FIG. 4 is a transmission electron microscopy (TEM) image of the nanoscale polyamide particle prepared in Example 3.

### Detailed Description of the Embodiments

The following provides a detailed description of the examples of the present invention, which is intended to explain the present invention and should not be construed as limiting the present invention.

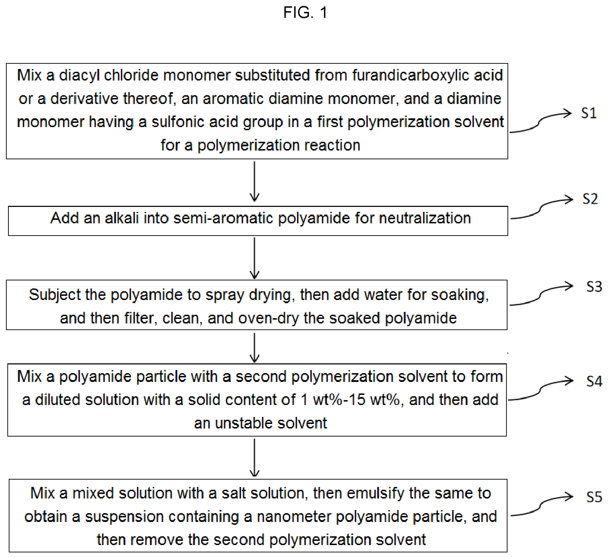

In one aspect of the present invention, the present invention provides a method for preparing a nanoscale polyamide particle. According to the examples of the present invention, referring to FIG. 1, the method includes as follows.

S1: A diacyl chloride monomer substituted from furandicarboxylic acid or a derivative thereof, an aromatic diamine monomer, and a diamine monomer having a sulfonic acid group are mixed in a first polymerization solvent for a polymerization reaction.

In this step, the diacyl chloride monomer substituted from furandicarboxylic acid or a derivative thereof, the aromatic diamine monomer, and the diamine monomer having a sulfonic acid group are mixed in the first polymerization solvent for the polymerization reaction to obtain semi-aromatic polyamide.

Further, by mass percentage, the diacyl chloride monomer substituted from furandicarboxylic acid or a derivative thereof accounts for 3%-10% in the first polymerization solvent, the diamine monomer having a sulfonic acid group accounts for 3%-10% in the first polymerization solvent, and the aromatic diamine monomer accounts for 3%-10% in the first polymerization solvent. It is found by the inventor that if the addition amount of the diamine monomer having a sulfonic acid group is excessively low, the particle size of the subsequently prepared polyamide particle is larger; and if the addition amount of the diamine monomer having a sulfonic acid group is excessively high, the molecular weight of the semi-aromatic polyamide may be excessively low. It should be noted that the diacyl chloride monomer substituted from furandicarboxylic acid is 2,5-furandicarbonyl chloride; the diacyl chloride monomer substituted from a furandicarboxylic acid derivative includes one or more of terephthaloyl chloride, isophthaloyl chloride, o-phthaloyl chloride, 1,9-naphthalenedicarbonyl chloride, adipoyl chloride, azelaoyl chloride, and dodecanedioyl chloride; the first polymerization solvent includes at least one of N-methylpyrrolidone, N,N-dimethylacetamide, and N,N-dimethylformamide; the aromatic diamine monomer includes at least one of 4,4-oxydianiline, 4,4-methylenedianiline, p-phenylenediamine, and m-phenylenediamine; and the diamine monomer having a sulfonic acid group includes at least one of 2,5-diaminobenzenesulfonic acid and 2,5-diamino-1,4-benzenedisulfonic acid.

S2: An alkali is added into the semi-aromatic polyamide for neutralization.

In this step, the alkali is added into the semi-aromatic polyamide to obtain polyamide. The added alkali is used to neutralize acidic substances such as hydrogen chloride generated in the step S1, thereby preventing corrosion to a reaction apparatus.

Further, an addition amount of the alkali is 2 wt%-7 wt% of the semi-aromatic polyamide. It is found by the inventor that if the addition amount of the alkali is excessively low, the generated hydrogen chloride cannot be completely neutralized, resulting in corrosion to the reaction apparatus. It should be noted that the alkali includes at least one of calcium hydroxide, sodium hydroxide, potassium hydroxide, and lithium hydroxide.

S3: The polyamide is subjected to spray drying, then water is added for soaking, and then the soaked polyamide is filtered, cleaned, and oven-dried.

In this step, the polyamide obtained in the step S2 is subjected to spray drying, the spray-dried polyamide forms a smaller particle, and then the water is added for soaking to remove a salt generated by a neutralization reaction and the excessive alkali added. Then, the soaked polyamide is filtered, cleaned, and oven-dried to obtain a polyamide particle.

S4: The polyamide particle is mixed with a second polymerization solvent to form a diluted solution with a solid content of 1 wt%-15 wt%, and then an unstable solvent is added.

In this step, the polyamide particle is mixed with the second polymerization solvent to form the diluted solution with a solid content of 1 wt%-15 wt%. The solid content of polyamide in the diluted solution is 1 wt%-15 wt%, which is obviously higher than that in the prior art. Moreover, the solid content has a wide range, thereby facilitating subsequent adjustment of the particle size of the polyamide particle as needed. Then, the unstable solvent is added to make the diluted solution reach an unstable state to obtain a mixed solution. It should be noted that the second polymerization solvent includes at least one of N-methylpyrrolidone, N,N-dimethylacetamide, and N,N-dimethylformamide, and the unstable solvent includes at least one of water, ethanol, ethylene glycol, propanol, and isopropanol.

S5: The mixed solution is mixed with a salt solution and then emulsified to obtain a suspension containing a nanometer polyamide particle, and then the second polymerization solvent is removed.

In this step, the mixed solution obtained in the step S4 is mixed with the salt solution. The salt solution enables the prepared polyamide particle to achieve a smaller particle size. The mixture is then emulsified to obtain the suspension containing a nanometer polyamide particle. Then, the second polymerization solvent can be removed by filtration, centrifugation, or using a ceramic membrane apparatus to ultimately obtain the nanoscale polyamide particle.

Further, a mass concentration of the salt solution is 0%-2%. It is found by the inventor that if an excessive amount of the salt solution is added, the solid content of the obtained polyamide particle is excessively large. Meanwhile, a volume ratio of the salt solution to the mixed solution is not less than 1. It should be noted that a salt in the salt solution includes at least one of calcium chloride, sodium chloride, potassium chloride, and lithium chloride, and a solvent includes at least one of water, ethanol, ethylene glycol, propanol, and isopropanol.

In the second aspect of the present invention, the present invention provides a nanoscale polyamide particle. According to the examples of the present invention, the nanoscale polyamide particle is prepared by the above-mentioned method. Therefore, the nanoscale polyamide particle has a relatively large particle size range, thus meeting more market demands. Meanwhile, the particle size can reach 10 nm or below.

Methods used in the present invention, unless otherwise specified, are conventional methods known to those skilled in the art, and reagents and other materials used, unless otherwise specified, are commercially available products.

### Example 1

A preparation process of a nanoscale polyamide particle in this example is as follows.

8.4 kg of N,N-dimethylacetamide was added into a reaction kettle, and then 0.4 kg of 4,4-oxydianiline and 0.4 kg of 2,5-diaminobenzenesulfonic acid were added; after both amines were completely dissolved, 0.8 kg of 2,5-furandicarbonyl chloride was added in three portions, and after completion of the addition, a reaction was carried out for 5 hours; and after completion of the reaction, 0.4 kg of calcium hydroxide was added and stirred for 1 hour to obtain polyamide.

The obtained polyamide was dried into a smaller particle using a spray drying apparatus, then water was added for soaking for 24 hours, and then suction filtration, washing, and oven-drying were performed to obtain granular polyamide. The obtained granular polyamide was dissolved in 158.4 kg of N,N-dimethylacetamide to obtain a polyamide diluted solution with a solid content of 1%, and then 33.6 kg of isopropanol was added and stirred for half an hour to obtain a mixed solution.

Then, the mixed solution and water were pumped into an emulsification pump for emulsifying at a volume ratio of 1:1, and after the emulsifying, a suspension containing a nanometer polyamide particle was obtained and then subjected to filtration washing, centrifugation, or permeation through a ceramic membrane to remove the N,N-dimethylacetamide to obtain the nanoscale polyamide particle.

### Example 2

A preparation process of a nanoscale polyamide particle in this example is as follows.

8.4 kg of N,N-dimethylacetamide was added into a reaction kettle, and then 0.4 kg of 4,4-methylenedianiline and 0.4 kg of 2,5-diamino-1,4-benzenedisulfonic acid were added; after both amines were completely dissolved, 0.8 kg of 2,5-furandicarbonyl chloride was added in three portions, and after completion of the addition, a reaction was carried out for 5 hours; and after completion of the reaction, 0.4 kg of calcium hydroxide was added and stirred for 1 hour to obtain polyamide.

The obtained polyamide was dried into a smaller particle using a spray drying apparatus, then water was added for soaking for 24 hours, and then suction filtration, washing, and oven-drying were performed to obtain granular polyamide. The obtained granular polyamide was dissolved in 78.4 kg of N,N-dimethylacetamide to obtain a polyamide diluted solution with a solid content of 2%, and then 16.8 kg of isopropanol was added and stirred for half an hour to obtain a mixed solution.

Then, the mixed solution and water were pumped into an emulsification pump for emulsifying at 1:1, and after the emulsifying, a suspension containing a nanometer polyamide particle was obtained and then subjected to filtration washing, centrifugation, or permeation through a ceramic membrane to remove the N,N-dimethylacetamide to obtain the nanoscale polyamide particle.

### Example 3

A preparation process of a nanoscale polyamide particle in this example is as follows.

8.4 kg of N,N-dimethylacetamide was added into a reaction kettle, and then 0.4 kg of 4,4-diaminobiphenyl and 0.4 kg of benzidinedisulfonic acid were added; after both amines were completely dissolved, 0.8 kg of 2,5-furandicarbonyl chloride was added in three portions, and after completion of the addition, a reaction was carried out for 5 hours; and after completion of the reaction, 0.4 kg of calcium hydroxide was added and stirred for 1 hour to obtain polyamide.

The obtained polyamide was dried into a smaller particle using a spray drying apparatus, then water was added for soaking for 24 hours, and then suction filtration, washing, and oven-drying were performed to obtain granular polyamide. The obtained granular polyamide was dissolved in 51.7 kg of N,N-dimethylacetamide to obtain a polyamide diluted solution with a solid content of 3%, and then 11.2 kg of isopropanol was added and stirred for half an hour to obtain a mixed solution.

Then, the mixed solution and water were pumped into an emulsification pump for emulsifying at 1:1, and after the emulsifying, a suspension containing a nanometer polyamide particle was obtained and then subjected to filtration washing, centrifugation, or permeation through a ceramic membrane to remove the N,N-dimethylacetamide to obtain the nanoscale polyamide particle.

### Example 4

A preparation process of a nanoscale polyamide particle in this example is as follows.

8.4 kg of N,N-dimethylacetamide was added into a reaction kettle, and then 0.4 kg of 2,5-furandimethylamine and 0.4 kg of 2,5-diaminobenzenesulfonic acid were added; after both amines were completely dissolved, 0.8 kg of 2,5-furandicarbonyl chloride was added in three portions, and after completion of the addition, a reaction was carried out for 5 hours; and after completion of the reaction, 0.4 kg of calcium hydroxide was added and stirred for 1 hour to obtain polyamide.

The obtained polyamide was dried into a smaller particle using a spray drying apparatus, then water was added for soaking for 24 hours, and then suction filtration, washing, and oven-drying were performed to obtain granular polyamide. The obtained granular polyamide was dissolved in 38.4 kg of N,N-dimethylacetamide to obtain a polyamide diluted solution with a solid content of 4%, and then 8 kg of isopropanol was added and stirred for half an hour to obtain a mixed solution.

Then, the mixed solution and water were pumped into an emulsification pump for emulsifying at 1:1, and after the emulsifying, a suspension containing a nanometer polyamide particle was obtained and then subjected to filtration washing, centrifugation, or permeation through a ceramic membrane to remove the N,N-dimethylacetamide to obtain the nanoscale polyamide particle.

### Example 5

A preparation process of a nanoscale polyamide particle in this example is as follows.

8.4 kg of N,N-dimethylacetamide was added into a reaction kettle, and then 0.4 kg of p-phenylenediamine and 0.4 kg of 2,5-diamino-1,4-benzenedisulfonic acid were added; after both amines were completely dissolved, 0.8 kg of 2,5-furandicarbonyl chloride was added in three portions, and after completion of the addition, a reaction was carried out for 5 hours; and after completion of the reaction, 0.4 kg of calcium hydroxide was added and stirred for 1 hour to obtain polyamide.

The obtained polyamide was dried into a smaller particle using a spray drying apparatus, then water was added for soaking for 24 hours, and then suction filtration, washing, and oven-drying were performed to obtain granular polyamide. The obtained granular polyamide was dissolved in 30.4 kg of N,N-dimethylacetamide to obtain a polyamide diluted solution with a solid content of 5%, and then 5.6 kg of isopropanol was added and stirred for half an hour to obtain a mixed solution.

Then, the mixed solution and water were pumped into an emulsification pump for emulsifying at 1:1, and after the emulsifying, a suspension containing a nanometer polyamide particle was obtained and then subjected to filtration washing, centrifugation, or permeation through a ceramic membrane to remove the N,N-dimethylacetamide to obtain the nanoscale polyamide particle.

### Example 6

A preparation process of a nanoscale polyamide particle in this example is as follows.

8.4 kg of N,N-dimethylacetamide was added into a reaction kettle, and then 0.4 kg of 4,4-methylenedianiline (MDA) and 0.4 kg of 2,5-diaminobenzenesulfonic acid were added; after both amines were completely dissolved, 0.8 kg of 2,5-furandicarbonyl chloride was added in three portions, and after completion of the addition, a reaction was carried out for 5 hours; and after completion of the reaction, 0.4 kg of calcium hydroxide was added and stirred for 1 hour to obtain polyamide.

The obtained polyamide was dried into a smaller particle using a spray drying apparatus, then water was added for soaking for 24 hours, and then suction filtration, washing, and oven-drying were performed to obtain granular polyamide. The obtained granular polyamide was dissolved in 38.4 kg of N,N-dimethylacetamide to obtain a polyamide diluted solution with a solid content of 4%, and then 8 kg of isopropanol was added and stirred for half an hour to obtain a mixed solution.

Then, the mixed solution and a 0.1 wt% calcium chloride aqueous solution were pumped into an emulsification pump for emulsifying at a volume ratio of 1:1, and after the emulsifying, a suspension containing a nanometer polyamide particle was obtained and then subjected to filtration washing, centrifugation, or permeation through a ceramic membrane to remove the N,N-dimethylacetamide to obtain the nanoscale polyamide particle.

### Example 7

A preparation process of a nanoscale polyamide particle in this example is as follows.

8.4 kg of N,N-dimethylacetamide was added into a reaction kettle, and then 0.4 kg of 4,4-methylenedianiline (MDA) and 0.4 kg of 2,5-diaminobenzenesulfonic acid were added; after both amines were completely dissolved, 0.8 kg of isophthaloyl chloride was added in three portions, and after completion of the addition, a reaction was carried out for 5 hours; and after completion of the reaction, 0.4 kg of calcium hydroxide was added and stirred for 1 hour to obtain polyamide.

The obtained polyamide was dried into a smaller particle using a spray drying apparatus, then water was added for soaking for 24 hours, and then suction filtration, washing, and oven-drying were performed to obtain granular polyamide. The obtained granular polyamide was dissolved in 14.4 kg of N,N-dimethylacetamide to obtain a polyamide diluted solution with a solid content of 10%, and then 2.3 kg of isopropanol was added and stirred for half an hour to obtain a mixed solution.

Then, the mixed solution and water were pumped into an emulsification pump for emulsifying at 1:1, and after the emulsifying, a suspension containing a nanometer polyamide particle was obtained and then subjected to filtration washing, centrifugation, or permeation through a ceramic membrane to remove the N,N-dimethylacetamide to obtain the nanoscale polyamide particle.

### Example 8

A preparation process of a nanoscale polyamide particle in this example is as follows.

8.4 kg of N,N-dimethylacetamide was added into a reaction kettle, and then 0.4 kg of 4,4-methylenedianiline (MDA) and 0.4 kg of 2,5-diaminobenzenesulfonic acid were added; after both amines were completely dissolved, 0.8 kg of terephthaloyl chloride was added in three portions, and after completion of the addition, a reaction was carried out for 5 hours; and after completion of the reaction, 0.4 kg of calcium hydroxide was added and stirred for 1 hour to obtain polyamide.

The obtained polyamide was dried into a smaller particle using a spray drying apparatus, then water was added for soaking for 24 hours, and then suction filtration, washing, and oven-drying were performed to obtain granular polyamide. The obtained granular polyamide was dissolved in 9.06 kg of N,N-dimethylacetamide to obtain a polyamide diluted solution with a solid content of 15%, and then 1.3 kg of isopropanol was added and stirred for half an hour to obtain a mixed solution.

Then, the mixed solution and water were pumped into an emulsification pump for emulsifying at 1:1, and after the emulsifying, a suspension containing a nanometer polyamide particle was obtained and then subjected to filtration washing, centrifugation, or permeation through a ceramic membrane to remove the N,N-dimethylacetamide to obtain the nanoscale polyamide particle.

### Comparative Example 1

8.4 kg of N,N-dimethylacetamide was added into a reaction kettle, and then 0.8 kg of 4,4-oxydianiline (ODA) was added; after the amines were completely dissolved, 0.8 kg of 2,5-furandicarbonyl chloride was added in three portions, and after completion of the addition, a reaction was carried out for 5 hours; and after completion of the reaction, 0.4 kg of calcium hydroxide was added and stirred for 1 hour to obtain polyamide. The obtained polyamide was dried into a smaller particle using a spray drying apparatus, then water was added for soaking for 24 hours, and then suction filtration, washing, and oven-drying were performed to obtain granular polyamide. The obtained granular polyamide was dissolved in 78.4 kg of N,N-dimethylacetamide, and then 16.8 kg of isopropanol was added and stirred for half an hour to obtain a polyamide diluted solution; and then, the diluted solution and water were pumped into an emulsification pump for emulsifying at 1:1, and after the emulsifying, a suspension containing a nanometer polyamide particle was obtained and then subjected to filtration washing, centrifugation, or permeation through a ceramic membrane to remove the N,N-dimethylacetamide to obtain a nanoscale polyamide particle.

### Comparative Example 2

8.4 kg of N,N-dimethylacetamide was added into a reaction kettle, and then 0.8 kg of 4,4-methylenedianiline (MDA) was added; after the amines were completely dissolved, 0.8 kg of 2,5 -furandicarbonyl chloride was added in three portions, and after completion of the addition, a reaction was carried out for 5 hours; and after completion of the reaction, 0.4 kg of calcium hydroxide was added and stirred for 1 hour to obtain polyamide. The obtained polyamide was dried into a smaller particle using a spray drying apparatus, then water was added for soaking for 24 hours, and then suction filtration, washing, and oven-drying were performed to obtain granular polyamide. The obtained granular polyamide was dissolved in 48.7 kg of N,N-dimethylacetamide, and then 11.2 kg of isopropanol was added and stirred for half an hour to obtain a polyamide diluted solution; and then, the diluted solution and water were pumped into an emulsification pump for emulsifying at 1:1, and after the emulsifying, a suspension containing a nanometer polyamide particle was obtained and then subjected to filtration washing, centrifugation, or permeation through a ceramic membrane to remove the N,N-dimethylacetamide to obtain a nanoscale polyamide particle.

### Comparative Example 3

8.4 kg of N,N-dimethylacetamide was added into a reaction kettle, and then 0.4 kg of 4,4-oxydianiline (ODA) and 0.4 kg of 2,5-diaminobenzenesulfonic acid were added; after both amines were completely dissolved, 0.8 kg of 2,5-furandicarbonyl chloride was added in three portions, and after completion of the addition, a reaction was carried out for 5 hours; and after completion of the reaction, 0.4 kg of calcium hydroxide was added and stirred for 1 hour to obtain polyamide. Then, 70 kg of N,N-dimethylacetamide was added, and then 16.8 kg of isopropanol was added and stirred for half an hour to obtain a polyamide diluted solution; and then, the diluted solution and water were pumped into an emulsification pump for emulsifying at 1:1, and after the emulsifying, a suspension containing a nanometer polyamide particle was obtained and then subjected to filtration washing, centrifugation, or permeation through a ceramic membrane to remove the N,N-dimethylacetamide to obtain a nanoscale polyamide particle.

### Comparative Example 4

8.4 kg of N,N-dimethylacetamide was added into a reaction kettle, and then 0.4 kg of 4,4-methylenedianiline (MDA) and 0.4 kg of 2,5-diamino-1,4-benzenedisulfonic acid were added; after both amines were completely dissolved, 0.8 kg of 2,5-furandicarbonyl chloride was added in three portions, and after completion of the addition, a reaction was carried out for 5 hours; and after completion of the reaction, 0.4 kg of calcium hydroxide was added and stirred for 1 hour to obtain polyamide. Then, 49.3 kg of N,N-dimethylacetamide was added, and then 11.2 kg of isopropanol was added and stirred for half an hour to obtain a polyamide diluted solution; and then, the diluted solution and water were pumped into an emulsification pump for emulsifying at 1:1, and after the emulsifying, a suspension containing a nanometer polyamide particle was obtained and then subjected to filtration washing, centrifugation, or permeation through a ceramic membrane to remove the N,N-dimethylacetamide to obtain a nanoscale polyamide particle.

### Effect verification:

The nanoscale polyamide particles prepared in Examples 1-8 and Comparative Examples 1-4 were formulated into 2% suspensions, the suspensions were dispersed using a high-shear homogenizer for 25 minutes and then diluted to obtain 50 g of diluted solutions with a solid content of 0.5%, meanwhile, 0.2 g of a 1 wt% sodium dodecyl sulfate solution was added, ultrasonication was performed at 720 W for 20 minutes, and their particle sizes were measured using a laser particle size analyzer. Results are shown in Table 1 below.

**Table 1 Particle size**

| / | D10 (um) | D50 (um) | D90 (um) | D100 (um) |
|---|---|---|---|---|
| Example 1 | 0.081 | 0.106 | 0.112 | 0.196 |
| Example 2 | 0.081 | 0.121 | 0.215 | 0.249 |
| Example 3 | 0.166 | 0.214 | 0.316 | 0.417 |
| Example 4 | 0.210 | 0.438 | 0.766 | 0.781 |
| Example 5 | 0.210 | 0.494 | 0.883 | 0.910 |
| Example 6 | 0.121 | 0.253 | 0.406 | 0.517 |
| Example 7 | 0.433 | 1.213 | 2.366 | 5.135 |
| Example 8 | 0.744 | 2.122 | 3.493 | 8.121 |
| Comparative Example 1 | 0.232 | 0.561 | 1.213 | 3.614 |
| Comparative Example 2 | 0.733 | 1.141 | 2.896 | 8.721 |
| Comparative Example 3 | 0.181 | 0.493 | 1.517 | 4.693 |
| Comparative Example 4 | 0.922 | 1.251 | 3.029 | 9.114 |

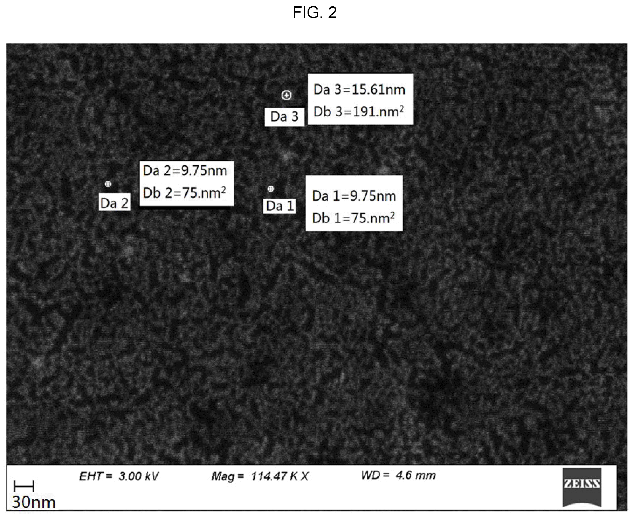

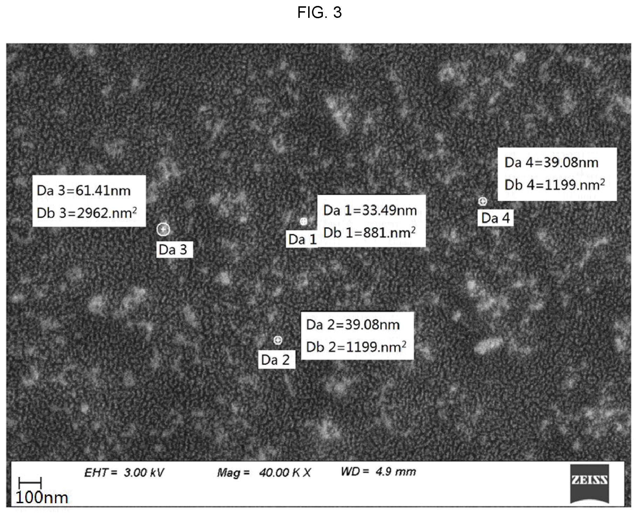

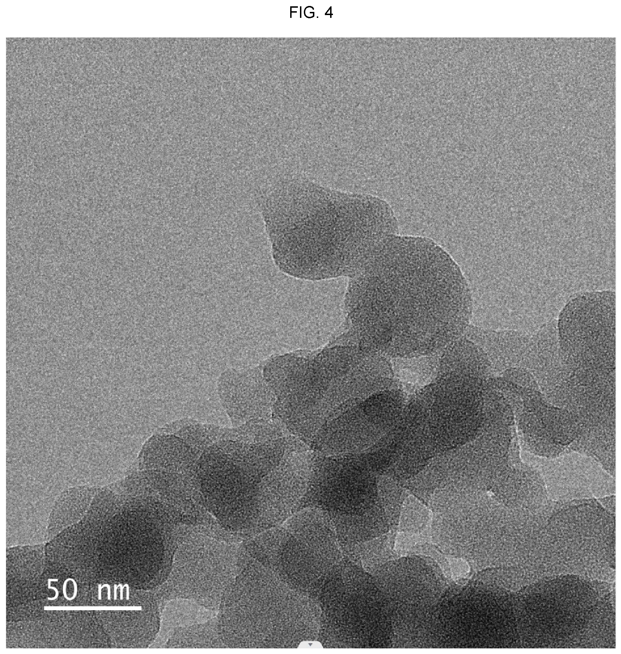

Through the detection data obtained by the laser particle size analyzer in Table 1, it can be found that as the concentration of the diluted solution increases, the particle size also increases accordingly. Meanwhile, the detection precision of the laser particle size analyzer for the nanoscale small particles may not be very accurate. SEM and TEM were performed on the nanoscale polyamide particles prepared in Example 1 and Example 3. An SEM image of the polyamide particle obtained in Example 1 is shown in FIG. 2, an SEM image of the polyamide particle obtained in Example 3 is shown in FIG. 3, and a TEM image is shown in FIG. 4. From scales and annotations in the figures, it can be seen that the actual particle size of the polyamide particles is smaller than the detection data obtained by the laser particle size analyzer. According to the above data, it can be seen that the D10 particle size of the polyamide particles obtained in Examples 1 to 8 ranges from 0.081 µm to 0.744 µm, indicating that the polyamide prepared by the method has a relatively wide particle size range. Thus, polyamide particles of different particle sizes can be prepared according to actual needs, and the particle size of the polyamide particles is controlled to better meet market demands.

According to the comparison between Comparative Example 1 and Example 2 and the comparison between Comparative Example 2 and Example 3, the polyamide obtained in Comparative Example 1 and Comparative Example 2 has a larger particle size, indicating that the particle size is larger when the diamine monomer having a sulfonic acid group is not added. According to the comparison between Comparative Example 3 and Example 2 and the comparison between Comparative Example 4 with Example 3, the polyamide obtained in Comparative Example 3 and Comparative Example 4 has a larger particle size, indicating that the polyamide without the step of spray drying has a larger particle size.

The examples described above merely express several embodiments of the present invention in more specific and detailed description, but should not be construed as limiting the patent scope of the present invention. It should be pointed out that for those of ordinary skill in the art, several variations and improvements can be made without deviating from the concept of the present invention, and all the variations and improvements fall within the scope of protection of the present invention.

## Claims

1. A method for preparing a nanoscale polyamide particle, comprising the following steps:
(1) mixing a diacyl chloride monomer substituted from furandicarboxylic acid or a derivative thereof, an aromatic diamine monomer, and a diamine monomer having a sulfonic acid group in a first polymerization solvent for a polymerization reaction to obtain semi-aromatic polyamide;
(2) adding an alkali into the semi-aromatic polyamide for neutralization to obtain polyamide;
(3) subjecting the polyamide to spray drying, then adding water for soaking, and then filtering, cleaning, and oven-drying the soaked polyamide to obtain a polyamide particle;
(4) mixing the polyamide particle with a second polymerization solvent to form a diluted solution with a solid content of 1 wt%-15 wt%, and then adding an unstable solvent to obtain a mixed solution; and
(5) mixing the mixed solution with a salt solution, then emulsifying the same to obtain a suspension containing a nanometer polyamide particle, and then removing the second polymerization solvent to obtain the nanoscale polyamide particle.

2. The method for preparing a nanoscale polyamide particle according to claim 1, wherein the first polymerization solvent and the second polymerization solvent respectively and independently comprise at least one of N-methylpyrrolidone, N,N-dimethylacetamide, and N,N-dimethylformamide.

3. The method for preparing a nanoscale polyamide particle according to claim 1, wherein in the step (1), by mass percentage, the diacyl chloride monomer substituted from furandicarboxylic acid or a derivative thereof accounts for 3%-10% in the first polymerization solvent, the diamine monomer having a sulfonic acid group accounts for 3%-10% in the first polymerization solvent, and the aromatic diamine monomer accounts for 3%-10% in the first polymerization solvent.

4. The method for preparing a nanoscale polyamide particle according to claim 1, wherein in the step (1), the diacyl chloride monomer substituted from furandicarboxylic acid is 2,5-furandicarbonyl chloride; and the diacyl chloride monomer substituted from a furandicarboxylic acid derivative comprises one or more of terephthaloyl chloride, isophthaloyl chloride, o-phthaloyl chloride, 1,9-naphthalenedicarbonyl chloride, adipoyl chloride, azelaoyl chloride, and dodecanedioyl chloride.

5. The method for preparing a nanoscale polyamide particle according to claim 1, wherein in the step (1), the aromatic diamine monomer comprises at least one of 4,4-oxydianiline, 4,4-methylenedianiline, 4,4-diaminobiphenyl, 2,5-furandimethylamine, p-phenylenediamine, and m-phenylenediamine.

6. The nanoscale polyamide particle and preparation method therefor according to claim 1, wherein in the step (1), the diamine monomer having a sulfonic acid group comprises at least one of 2,5-diaminobenzenesulfonic acid, 2,5-diamino-1,4-benzenedisulfonic acid, and benzidinedisulfonic acid.

7. The method for preparing a nanoscale polyamide particle according to claim 1, wherein in the step (2), the alkali comprises at least one of calcium hydroxide, sodium hydroxide, potassium hydroxide, lithium hydroxide, liquid ammonia, sodium carbonate, calcium carbonate, potassium carbonate, and lithium carbonate, and an addition amount of the alkali is 2 wt%-7 wt% of the semi-aromatic polyamide.

8. The method for preparing a nanoscale polyamide particle according to claim 1, wherein in the step (4), the unstable solvent comprises at least one of water, ethanol, ethylene glycol, propanol, and isopropanol.

9. The method for preparing a nanoscale polyamide particle according to claim 1, wherein in the step (5), a salt in the salt solution comprises at least one of calcium chloride, sodium chloride, potassium chloride, and lithium chloride, a solvent comprises at least one of water, ethanol, ethylene glycol, propanol, and isopropanol, a mass concentration of the salt solution is 0%-2%, and a volume ratio of the salt solution to the mixed solution is not less than 1.

10. A nanoscale polyamide particle, prepared by the preparation method according to any one of claims 1-9.
